# EUROPEAN PATENT APPLICATION

(11) **EP 0 990 565 A1**
(43) Date of publication of application: **05.04.2000**
(21) Application number: 98307870.0
(22) Date of filing: 28.09.1998
(51) Int. Cl.: B60R 21/00

(54) **Device for detecting seat occupancy and air bag device for a motor vehicle**

(71) Applicant: TAKATA CORPORATION, Minato-ku, Tokyo (JP)
(72) Inventor: Minami, Yoshihiko, Kanzaki-gun, Shiga (JP)
(74) Representative: Jenkins, Peter David

(57) **Abstract**

A device is disclosed which detects the weight of an occupant in a seat of a vehicle, thereby enabling the amount of gases to be generated for an air bag device to be controlled. A seat 3 comprising a seat cushion 1 and a seat back 2 is supported to vehicle members through a seat adjuster 4, rails 5, and rail mount brackets 6, 7. Disposed between the rails 5 and the brackets 6, 7 are weighing sensors 8, 9 for detecting the weight of an occupant in the seat.

## Description

The present invention relates to a device for detecting seat occupancy and an air bag device for a motor vehicle.

Described in JUA 47-30219 and JPA 7-285364 are weighing sensors provided in vehicle seats. The weighing sensor described in the former is provided for detecting the presence of an occupant and the weighing sensor described in the latter is provided for detecting the position of an occupant seated in a vehicle seat.

As well known in the art, an air bag device is one of occupant protective devices which inflates an air bag to receive an occupant by the inflated air bag when a vehicle comes into collision. It is desired to provide an air bag device capable of protecting an occupant more sufficiently.

It is an aim of the present invention to provide an air bag device which supplies small amounts of gases into an air bag when an occupant of lightweight is seated and which supplies large amounts of gases into the air bag when an occupant of heavy weight is seated.

A device for detecting seat occupancy of the present invention comprises a seat body having a seat cushion and a seat back, and a weighing sensor for detecting the entire weight applied to said seat body by an occupant seated in said seat body.

An air bag device of the present invention comprises gas generating means which can control the amount of gases to be generated, and an air bag which is inflatable with gases from the gas generating means, and is characterized by controlling means for controlling the amount of gases to be generated by the gas generating means corresponding to a weight value detected by weighing sensors of the device for detecting seat occupancy.

According to the present invention, the amount of gases to be generated by the gas generating means can be controlled corresponding to the weight of an occupant in the seat.

Embodiments of the present invention will now be described, by way of example only, with reference to the accompanying drawings, in which:-
Fig. 1a is a perspective view showing a device for detecting seat occupancy according to an embodiment, and Fig. 1b is a side view of main parts of the device for detecting seat occupancy;
Fig. 2 is a block diagram of an air bag device according to the embodiment; and
Fig. 3 is a perspective view of a seat mount base employed in a device for detecting seat occupancy according to another embodiment.

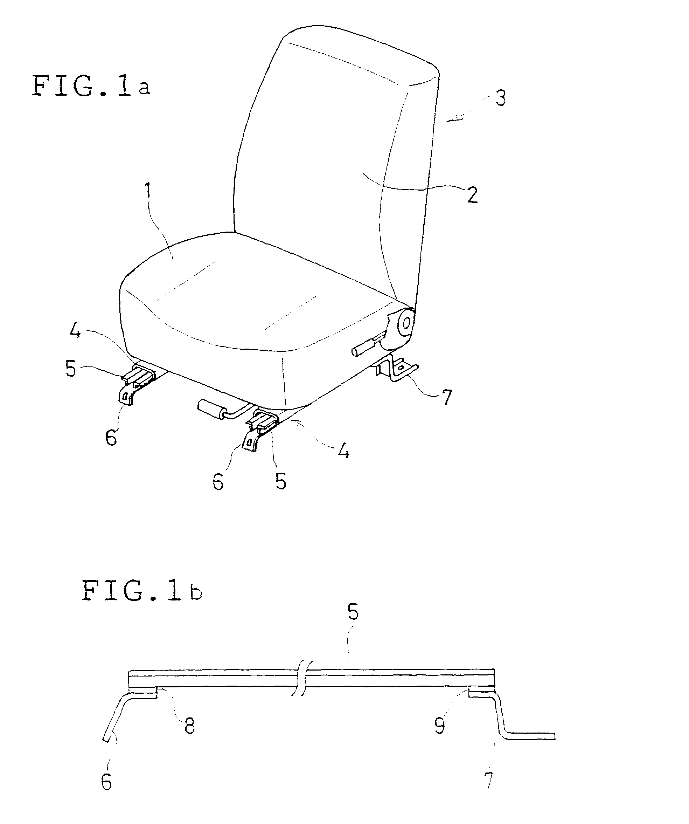

Hereinafter, embodiments of the present invention will be described with reference to the drawings. Fig. 1a is a perspective view showing a device for detecting seat occupancy according to an embodiment of the present invention and Fig. 1b is a side view showing the installed condition of weighing sensors.

Fixed to the bottom of a seat body (hereinafter, sometimes referred to as "seat") 3 of a driver seat or a passenger seat having a seat cushion 1 and a seat back 2 are seat adjusters 4 which are slidably engaged with rails 5. The front and rear ends of the rails 5 are fixed to vehicle members (not shown) by brackets 6, 7.

As shown in Fig. 1b, weighing sensors 8, 9 are disposed between the rails 5 and the rail mount brackets 6, 7.

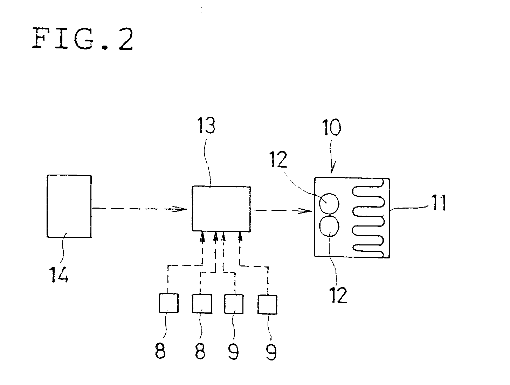

Fig. 2 is a block diagram of an air bag device which controls the amount of gases to be generated for the air bag device according to detection signals from the weighing sensors 8, 9.

The air bag device 10 is provided with gas generating means comprising a plurality of inflators 12 for inflating an air bag 11. The inflators 12 are actuated to generate gases in response to a signal from a controller 13 of the air bag device. Input into the controller 13 is a collision detection signal from an impact sensor 14. Also input into the controller 13 are weight detection signals from the weighting sensors 8, 9. The rails 5 are disposed on both right and left sides of the seat 2, respectively, and each rail is provided with the weighing sensors 8, 9. Accordingly, the weight detection signals from the four weighing sensors 8, 8. 9, 9 are input to the controller 13.

When the impact sensor 14 detects a collision, the controller 13 decides the number of inflators 12 to be actuated according to the weight of an occupant seated in the seat, the weight being decided by the detection signals from the weighing sensors 8, 9, and sends a signal to the air bag device 10. According to the signal, the designated number of inflators 12 are actuated to inflate the air bag 11.

When the weight of the occupant in the seat 3 is lighter than a predetermined value, one inflator 12 is actuated in this embodiment so that relatively small amounts of gases are supplied into the air bag 11, thereby making the inner pressure of the deployed air bag 11 relatively low. That is, the air bag 11 is deployed soft. Since the weight of the occupant is light, the occupant can be sufficiently received even with the air bag 11 deployed relatively soft.

When the weight of the occupant in the seat 3 is heavier than the predetermined value, two inflators 12 are actuated to supply large amounts of gases into the air bag 11 so as to make the inner pressure of the deployed air bag 11 high. Even when the occupant of heavy weight plunges into the air bag 11, the occupant can be sufficiently received with the air bag 11.

When the magnitude of the collision detected by the impact sensor 14 is large, the inner pressure of the air bag 11 may be controlled to be sufficiently high regardless of the weight of the occupant. On the contrary, when the magnitude of the collision is small, the inner pressure of the air bag 11 may be controlled to be relatively small regardless of the weight of the occupant.

Though the weighing sensors 8, 9 are disposed between the rails 5 and the rail mount brackets 6, 7 in the above embodiments, the weighing sensors may be disposed at any places where allow the weight of the occupant in the seat to be detected according to the present invention, so the weighing sensors may be disposed at other places as well as the places described above.

The present invention can be applied to a driver's seat or a passenger seat.

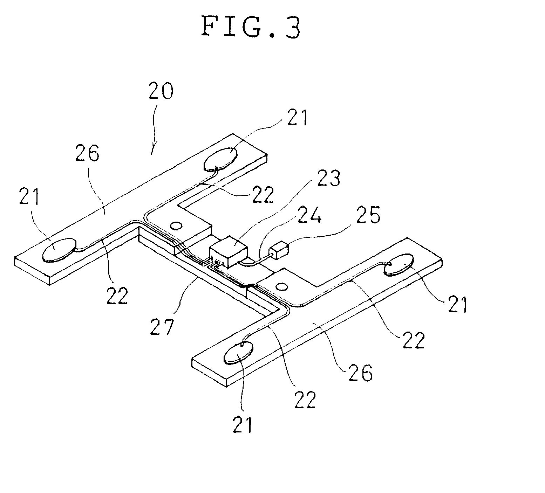

The weighing sensors 8, 9 are provided individually in the above embodiment. In this case, it takes large man-hours to install the weighing sensors to the vehicle body and there is a possibility of a cable being caught during the installation. Fig. 3 shows parts of a device which comprises, to overcome the shortcoming, a seat mount base 20 for supporting a seat, weighing sensors 21 mounted on the seat mount base 20, cables 22 laid from weighing sensors 21 on the seat mount base 20, a signal converter 23 disposed on the seat mount base 20 to which the cables 22 are connected, and a cable 24 through which signal from the signal converter 23 is output to a controller of the air bag device. Numeral 25 designates a connector at an end of a cable 24.

The seat mount base 20 comprises a pair of side bases 26, 26 and a tie base 27 connecting the side bases 26, 26 so that the seat mount base 20 is formed in an H-like configuration. It should be noted that the seat mount base 20 is not limited to such a structure comprising three members, a structure comprising two or four members may be employed, and a structure comprising only one member (i.e. the structure entirely integrally formed) may also be employed.

The rails 5 for slidably supporting the seat may be disposed on the upper surface of the seat mount base 20. In this case, the weighing sensors 21 are disposed between the respective ends of the rails 5 and the seat mount base 20. The rails 5 may be disposed on the lower surface of the seat mount base 20. In this case, the seat is disposed on the seat mount base 20 through the respective weighing sensors 21.

The signal converter 23 processes the signals from the weighing sensors 21 such as strain gages to compute the weight and outputs a weight data signal through the cable 24.

The use of the seat mount base 20 shown in Fig. 3 significantly improves the working efficiency of installation of the weighing sensors and ensures the protection of the cables. The cables may be covered with protection materials (e.g. sheaths).

As mentioned above, the device of the present invention can detect the weight of an occupant in the seat. According to the weight detected by the device, the amount of gases to be generated by the gas generator of the air bag device is controlled so that the inner pressure of the air bag to be inflated in a vehicle collision is controlled corresponding to the weight, thereby enabling the protection of the occupant suitable for the weight of the occupant.

## Claims

1. A device for detecting vehicle seat occupancy comprising:
a seat body having a seat cushion and a seat back; and
a weighing detector for detecting the entire weight applied to said seat body by an occupant seated in said seat body.

2. A device as claimed in claim 1, wherein said seat body has a seat adjuster fixed to a lower side of said seat cushion, said seat adjuster is slidably engaged to two rails, and said weighing detector is disposed between said rails and rail mount brackets.

3. A device as claimed in claim 2, wherein said weighing detector includes a plurality of weighing sensors.

4. A device as claimed in claim 3, wherein said weighing sensors are disposed at both ends of said rails, respectively and the number of the weighing sensors is thus four.

5. A device as claimed in claim 1, wherein said seat body is disposed on a seat mount base which is provided with weighing sensors of said weighing detector.

6. A device as claimed in claim 5, wherein rails are disposed on said seat mount base through said weighing sensors and said seat body is slidably supported by said rails.

7. A device as claimed in claim 5, wherein said seat body is disposed on said seat mount base through said weighing sensors and rails are disposed under said seat mount base.

8. A device as claimed in claim 5, wherein said seat mount base is provided with a signal converter, and said weighing sensors and said signal converter are connected through cables which extend along said seat mount base.

9. A device as claimed in claim 8, wherein an output signal from said signal converter is output to a controller of an air bag device through a cable.

10. A device as claimed in claim 5, wherein said seat mount base has a pair of side bases and a tie base connecting said side bases.

11. An occupant protective device comprising:
a seat body having a seat cushion and a seat back;
a weighing detector for detecting the entire weight applied to said seat body by an occupant seated in said seat body;
an inflatable air bag positioned in the vicinity of an occupant;
gas generating means for supplying gases into said air bag to inflate said air bag; and
a controller for controlling the amount of gases to be generated by said gas generator corresponding to a weight detected by said weighing detector.

12. An occupant protective device as claimed in claim 11, wherein said controller increases the amount of gases to be generated in response to the increase of said detected weight.

13. An occupant protective device as claimed in claim 12, wherein said gas generating means includes a plurality of gas generators, and the number of gas generators to be actuated to generate gases is increased in response to the increase of said detected weight.

14. An occupant protective device as claimed in claim 12, further comprising detecting means for detecting the magnitude of a vehicle collision.

15. An occupant protective device as claimed in claim 14, wherein when the magnitude of the vehicle collision detected by said detecting means is greater than a predetermined value, the controller increases the amount of gases to be generated regardless of the detected weight.

16. An occupant protective device as claimed in claim 14, wherein when the magnitude of the vehicle collision detected by said detecting means is smaller than a predetermined value, the controller decreases the amount of gases to be generated regardless of the detected weight.
